# FASCICULE DE BREVET EUROPEEN

(11) **EP 3 517 871 B1**
(45) Date de publication et mention de la délivrance du brevet: **20.01.2021**
(21) Numéro de dépôt: 19153104.5
(22) Date de dépôt: 22.01.2019
(51) Int. Cl.: F28D 1/02, F28D 1/04, F28D 1/047, F28D 20/00, F28D 21/00, F28F 27/00

(54) **DISPOSITIF DE RÉCUPÉRATION DE CHALEUR**
WÄRMERÜCKGEWINNUNGSVORRICHTUNG
HEAT RECOVERY DEVICE

(30) Priorité: 25.01.2018 FR 1850602
(43) Date de publication de la demande: 31.07.2019
(73) Titulaire: Realisation Chauffage Sanitaire, 16130 Juillac-le-Coq (FR)
(72) Inventeur: GIRARDIE, Alain, 16130 JUILLAC LE COQ (FR)
(74) Mandataire: Ipside

(56) Documents cités:
- EP-A1- 1 403 608
- WO-A1-2010/123474
- WO-A1-2016/135209
- FR-A1- 2 317 358
- FR-A1- 2 976 347

## Description

### Domaine de l'invention

La présente invention un dispositif de récupération de chaleur sur une cuve de refroidissement d'une distillerie d'alcool pour alimenter un système de chauffage ou de génération d'eau chaude.

### Arrière plan technologique

Les distilleries telles que les distilleries de cognac pratiquant la distillation dite distillation charentaise à partir de vin comportent des cuves de refroidissement dans lesquelles de l'eau circule autour d'un serpentin de condensation des vapeurs d'alcool pour maintenir le serpentin à une température d'environ 70°C à 80°C.

Cette eau réchauffée par le serpentin ne peut pas être rejetée à une telle température dans les égouts et doit être refroidie.

La présente invention a pour but de récupérer une partie de la chaleur de l'eau de telles cuves de refroidissement pour l'utiliser dans un système de chauffage ou de génération d'eau chaude pour une habitation notamment.

Le document WO 2010/123474 A1 divulgue un dispositif de récupération de chaleur de l'état de l'art comportant un bac logeant une pluralité de tubes échangeurs en communication par des conduits en circuit fermé avec un échangeur de chaleur. De l'eau est amenée dans le bac pour être chauffée avant d'aller dans un ballon de! stockage d'eau chaude et d'alimentation d'un circuit de chauffage d'une maison.

### Brève description de l'invention

Dans ce but la présente invention propose un dispositif de récupération de chaleur sur une cuve de refroidissement telle qu'une cuve de refroidissement d'alcool dans un procédé de distillation qui comporte un bac, dont les parois sont recouvertes de matériau isolant thermique, alimenté à partir d'une arrivée d'eau chaude intermittente en provenance de la cuve; ledit bac logeant une pluralité de tubes échangeurs bobinés, en communication par des conduits en circuit fermé avec un ballon de stockage d'eau chaude et d'alimentation d'un circuit extérieur de chauffage et pour lequel les conduits sont pourvus de circulateurs pilotés pour amener l'eau réchauffée dans le ballon.

Les tubes échangeurs bobinés sont avantageusement étagés en hauteur dans le bac pour récupérer la chaleur à divers niveaux dans le bac.

Préférablement, les tubes échangeurs sont reliés par groupes sur trois niveaux et disposés dans le bac de sorte qu'un premier groupe de tubes échangeurs en haut du bac puisse récupérer la chaleur de l'eau du haut du bac, un deuxième groupe de tubes échangeurs en partie intermédiaire du bac puisse récupérer la chaleur de l'eau dans la partie intermédiaire du bac et un troisième groupe de tubes échangeurs en partie inférieure du bac puisse récupérer la chaleur de l'eau dans le bas du bac compte tenu de la stratification de la température de l'eau dans le bac.

Avantageusement, un automate de contrôle relié à des sondes de température sur les échangeurs et une sonde de température en fond de ballon est configuré pour piloter les circulateurs des échangeurs en fonction de la température de l'eau dans les échangeurs reliés au ballon par les conduits et en fonction de la température du ballon pour réguler la température dudit ballon.

Le bac peut comporter une sortie d'eau refroidie vers un réservoir constituant une réserve de lavage de la distillerie.

Les tubes échangeurs organisées en groupes de tubes échangeurs comportent préférablement une pluralité de tubes circulaires ou en spirale bobinés et raccordés sur des tubes distributeurs eux-mêmes reliés aux conduits reliant les groupes de tubes échangeurs au ballon de stockage d'eau chaude.

Le ballon de stockage alimente avantageusement le circuit de chauffage au travers d'une bouteille de mélange.

Le ballon peut notamment être pourvu d'un thermostat pilotant un dispositif de commutation adapté à commuter le chauffage soit sur le ballon soit sur une chaudière raccordée à la bouteille de mélange.

### Brève description des dessins

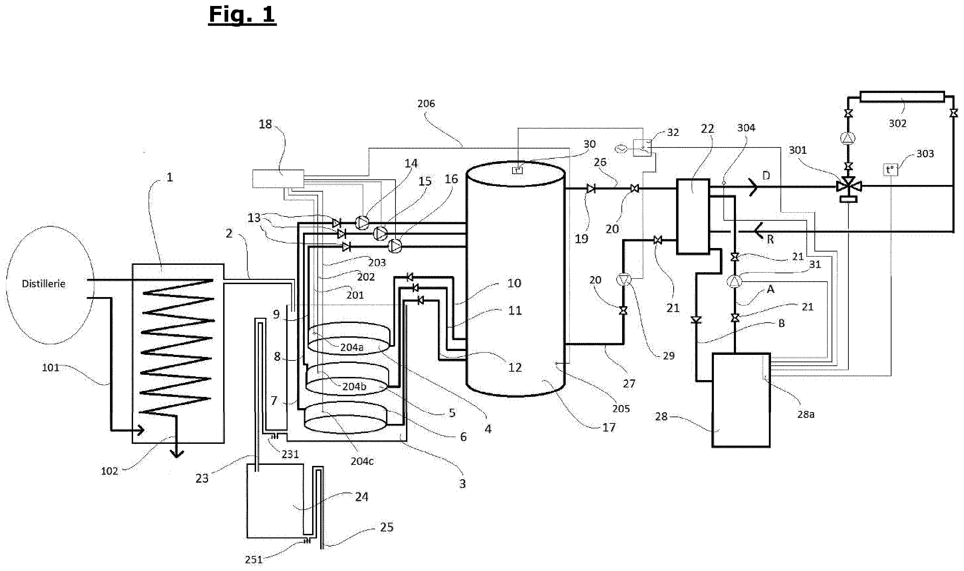

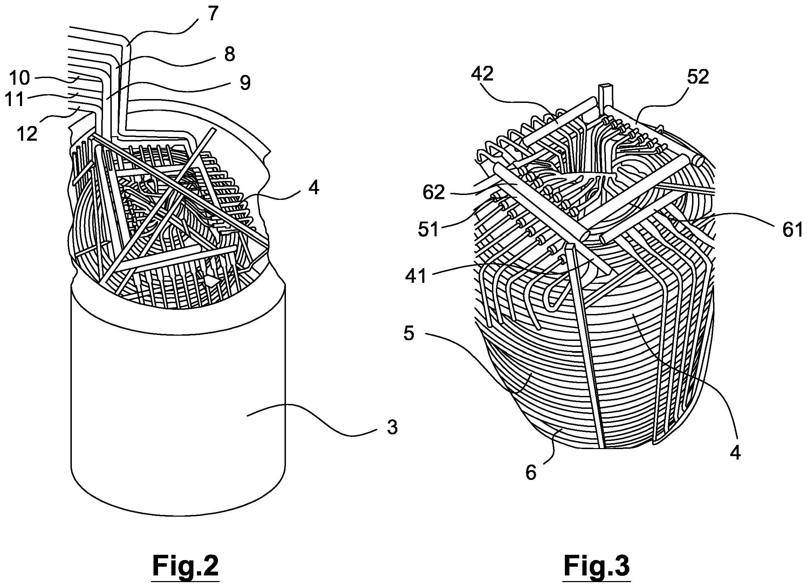

D'autres caractéristiques et avantages de l'invention seront apparents à la lecture de la description qui suit d'un exemple non limitatif de réalisation de l'invention en référence aux dessins qui représentent:
En figure 1 : une vue schématique d'un dispositif selon l'invention;
En figure 2: un détail d'un bac selon l'invention;
En figure 3: une vue de serpentins bobinés de l'invention.

### Description détaillée de modes de réalisation de l'invention

La figure 1 représente un exemple de réalisation d'un dispositif de récupération de chaleur de l'invention.

Le dispositif se raccorde sur une cuve de refroidissement 1 telle qu'une cuve de refroidissement d'alcool dans un procédé de distillation.tel qu'un procédé de distillation charentaise comme connu du document FR2317358 A1.

Une telle cuve renferme un serpentin 102 de condensation d'alcool et est refroidie par de l'eau en sorte de maintenir la température de l'alcool en sortie du serpentin entre 14°C et 18°C. Pour ce faire, la cuve comporte une arrivée d'eau froide 101 intermittente régulée en fonction de la température de sorte du serpentin 102. L'eau de refroidissement de la cuve est réchauffée par le serpentin et ressort de manière intermittente à une température de l'ordre de 70°C à 80°C par un trop plein. Cette eau réchauffée est utilisée dans la présente invention pour chauffer de l'eau qui va être stockée dans un ballon 17 pour être ensuite utilisée dans un circuit de chauffage par exemple le circuit de chauffage d'une habitation.

Le dispositif représenté comporte ainsi un bac 3, alimenté à partir de l'arrivée d'eau chaude intermittente 2 en provenance de la cuve. Cette eau est à une température d'environ 70°C à 80°C, température habituelle de fonctionnement de la cuve 1.

Le bac 3 représenté en figure 2 comporte une paroi cylindrique recouvertes de matériau isolant thermique pour limiter la déperdition de chaleur.

De retour à la figure 1, le bac loge une pluralité de tubes échangeurs de chaleur bobinés 4, 5, 6, répartis selon l'exemple en trois groupes étagés dans le bac. Les tubes échangeurs ou serpentins sont en communication avec un ballon 17 de stockage d'eau chaude par des conduits 7, 8, 9 de départ et des conduits 10, 11, 12 de retour pour réaliser un circuit fermé avec le ballon 17. Les conduits sont munis de clapets anti-retour 13 et de circulateurs 14, 15, 16 pilotés par des régulateurs ici représentés regroupés dans un automate 18.

Le ballon 17 de stockage d'eau chaude est destiné à alimenter un circuit extérieur de chauffage et comporte pour ce faire une conduite de départ 26 et une conduite de retour 27 vers une bouteille de mélange 22 appelée aussi bouteille de découplage hydraulique qui effectue un découplage hydraulique entre les circuits qui lui sont raccordés, ici les circuit d'eau du ballon 17, circuit d'eau chaudière et circuit extérieur de chauffage.

La chaudière est raccordée à la bouteille de mélange 22 par un départ A et un retour B, le circuit de chauffage traditionnel ayant pour sa part un départ D et un retour R.

La conduite de départ 26 du ballon 17 vers la bouteille de mélange comporte un clapet anti retour 19 et au moins une vanne d'arrêt 20 ainsi qu'un circulateur 29.

Toujours selon la figure 1, côté bac, les tubes échangeurs bobinés sont étagés en hauteur dans le bac pour récupérer la chaleur à divers niveaux dans le bac et, dans l'exemple représenté, les tubes échangeurs sont reliés par groupes sur trois niveaux et disposés dans le bac de sorte que:
- un premier groupe de tubes échangeurs 4 en haut du bac reliés au ballon par une conduite de départ 9 et une conduite de retour 10 récupère la chaleur de l'eau du haut du bac,
- un deuxième groupe de tubes échangeurs 5 en partie intermédiaire du bac récupère la chaleur de l'eau de la partie intermédiaire du bac et,
- un troisième groupe de tubes échangeurs 6 en partie inférieure du bac récupère la chaleur de l'eau de la partie basse du bac.

Les trois échangeurs 4, 5 et 6, disposés dans le bac 3, isolé pour ne pas perdre de calorie, sont chacun relié au ballon par un circuit fermé et gérés chacun par une régulation qui commande les circulateurs 14, 15, 16 suivant les différences de température entre les trois niveau haut des échangeurs et la température basse du ballon de stockage 17.

La régulation prend en compte la température dans les échangeurs chacun muni d'une sonde de température 204a, 204b, 204c et la température dans le ballon par une sonde 205.

Une représentation des tubes échangeurs est donnée à la figure 3. Les tubes échangeurs logés dans le bac sont organisées en groupes 4, 5, 6 de tubes échangeurs et comportent une pluralité de tubes circulaires ou en spirale qui sont bobinés pour former un dispositif échangeur compact et avec une grande surface d'échange avec l'eau dans le bac.

Les tubes de chaque groupe de tubes sont raccordés sur des tubes distributeurs, Le tube distributeur 41 de départ et le tube distributeur 42 de retour pour le groupe supérieur 4, le tube distributeur 51 de départ et le tube 52 de retour pour le groupe intermédiaire 5 et le tube distributeur 61 de départ ainsi que le tube distributeur 52 de retour pour le groupe inférieur 6. Les tubes distributeurs sont eux-mêmes reliés aux conduits 7, 8, 9, 10, 11, 12 reliant les groupes de tubes échangeurs au ballon 17 de stockage d'eau chaude.

Le diamètre des conduits 7 à 12 est équivalent au diamètre de l'ensemble des serpentins de chaque échangeur en sorte de récupérer au plus vite les calories présentes.

Les serpentins des échangeurs forment des bobines compactes de tubes sont réparties dans le bac comme représenté à la figure 2 où les départs 7, 8, 9 vers le ballon et les retours 10, 11, 12 sont raccordés aux tubes distributeurs.

Du fait de l'intermittence du débit d'eau venant de la cuve de la distillerie, une stratification de l'eau en température s'établit dans le bac 3.

En fonctionnement, le but du système est de réchauffer l'eau du ballon au moyen des échangeurs qui prennent les calories de l'eau du bac.

Pour ce faire le système comporte une sonde de température 205 en bas du ballon 17 et une sonde de température 204a, 204b, 204c pour chaque échangeur 4, 5, 6. Les sondes de température sont reliées par des liaisons électriques 201, 202, 203, 206 à des régulateurs dans l'automate 18.

L'automate est programmé pour alimenter le ballon avec de l'eau venant des échangeurs lorsque la température basse du ballon mesurée avec la sonde de température basse 205 est inférieure à celle mesurée dans les échangeurs avec un seuil défini.

D'un point de vue général, le principe est que lorsque la différence de température entre la sonde de température d'un échangeur et la sonde basse du ballon de stockage dépasse la différence de température réglée au niveau d'un régulateur de l'automate 18, le circulateur de l'échangeur se met en marche. La chaleur de l'échangeur est transmise au ballon de stockage. La différence de température diminue alors et lorsque la différence de température et inférieure à la consigne, le circulateur s'arrête.

Dans le cas où l'on est face à un petit débit d'eau chaude provenant de la cuve de refroidissement de la distillerie, seul le circulateur 16 de l'échangeur haut 4 va se mettre en marche lorsque un premier régulateur de l'automate détecte une différence de température entre la sonde 204a de l'échangeur supérieur 4 et la sonde basse 205 du ballon de stockage supérieure à un premier seuil calibré.

Lorsque le débit d'eau chaude provenant de la cuve de refroidissement de la distillerie est un débit moyen, le 1^{er} échangeur 4 ne suffit pas à prendre les calories et la température d'eau augmente en partie intermédiaire du bac 3. Le circulateur 15 de l'échangeur intermédiaire 5 commandé par un deuxième régulateur de l'automate 18 va se mettre en marche lorsque la différence de température entre la sonde de température 204b de l'échangeur intermédiaire 5 et la sonde basse du ballon de stockage dépasse un deuxième seuil calibré.

Lorsque le débit d'eau chaude provenant de la cuve de refroidissement de la distillerie est important, les échangeurs haut 4 et intermédiaire 5 ne suffisent plus pour prendre les calories et l'eau chaude descend dans le bac 3 au niveau de l'échangeur inférieur 6. Lorsque la différence de température de l'eau dans l'échangeur 6 par rapport à la température en bas du ballon mesurées par la sonde 204c et la sonde 205 est supérieure à un troisième seuil calibré, le circulateur 14 commandé par un troisième régulateur de l'automate va se mettre en marche par un troisième régulateur de l'automate.

Inversement lorsque le débit diminue les circulateurs 14 puis 15 puis 16 s'arrêtent lorsque les différences de température entre les sondes respectives des échangeurs bas, intermédiaire puis haut par rapport à la température en bas du ballon repassent sous les seuils calibrés.

En résumé, lorsque le débit d'eau chaude de la distillerie est faible, le circuit circulateur 16, échangeur 4 se met en marche seul puisque l'eau chaude venant de la distillerie ne peut réchauffer que la partie haute du bac.

Lorsque le débit d'eau chaude de la distillerie est plus important, le circuit circulateur 15, échangeur 5 se met en marche puisque l'eau chaude venant de la distillerie descend dans le réservoir et la différence de température entre la sonde 204B et la sonde 205 augmente.

Lorsque le débit d'eau chaude de la distillerie est maximal, tout le réservoir est à la même température la différence de température entre la sonde 204C et la sonde 205 augmente ce qui met en route le 3ème circulateur.

Ainsi, le fonctionnement des circulateurs s'adapte à la quantité de chaleur disponible en fonction du débit intermittent de la distillerie et de la température atteinte dans les parties haute, intermédiaire et inférieure du bac en fonction de ce débit.

Pour un ballon dont la température de consigne minimale est de l'ordre de 40°C, Il est donc possible de récupérer des calories dans le bac entre une température d'environ 45°C jusqu'à la température maximale de la cuve qui est entre 70°C et 80°C en fonctionnement normal.

Côté chauffage, l'invention propose de coupler le ballon 17 avec une chaudière 28 au niveau d'une bouteille de mélange pour que, lorsque la température dans le ballon est suffisante pour alimenter le chauffage (environ 40°C en partie haute du ballon), le brûleur de la chaudière s'arrête et le circulateur 29 fait circuler l'eau dans le chauffage 302 à partir du ballon et pour, que lorsque la température dans le ballon est insuffisante, la chaudière 28 prenne le relais, le circulateur 29 étant arrêté, le brûleur et le circulateur 31 de la chaudière mis en route en fonction de la température recherchée au niveau du chauffage. Ceci est réalisé au moyen d'un thermostat 30 en haut du ballon 17 et d'un dispositif commutation 32, par exemple de type relais inverseur permettant de mettre en fonction soit le brûleur de la chaudière 28 et le circulateur 31 de la chaudière, soit le circulateur 29 du ballon 17.

De manière traditionnelle les circuits entre le ballon et le chauffage sont pourvus de clapets anti retour 19 et vannes d'arrêt 20, 21 autant que nécessaires pour permettre la maintenance et le fonctionnement du chauffage.

Le circuit extérieur de chauffage comporte de manière traditionnelle une vanne trois voies 301 pilotée par la carte de commande 28a de la chaudière 28, un circulateur et des vannes d'arrêt.

Selon l'exemple il est à noter que lorsque le chauffage est commuté sur le ballon 17, la chaudière continue de piloter la vanne trois voies 301 du chauffage en fonction de la température d'ambiance recherchée au niveau d'un thermostat d'ambiance 303 et une sonde de température 304 en sortie de bouteille.

De retour au système échangeur de chaleur, le bac 3 comporte une sortie d'eau refroidie 23 vers un réservoir 24 constituant une réserve de lavage de la distillerie. La sortie 23 comporte un dispositif siphon qui ne laisse passer l'eau que lorsqu'une hauteur d'eau donnée est atteinte dans le bac ce qui régule la hauteur d'eau dans le bac.

Le coude du siphon est positionné à un niveau tel que de l'eau reste présente au dessus des échangeurs. La prise basse sur le bac permet que l'eau chaude ne s'évacue pas sans que les échangeurs aient pu prendre les calories apportées par la distillerie.

Cette sortie basse comporte un robinet 231 de vidange. Le réservoir 24 comporte lui-même une sortie 25 pourvue d'un siphon et un robinet de vidange 251.

L'ensemble des circuits peuvent être, comme connu, équipés de soupapes de sécurité pour éviter les surpressions. Par ailleurs, le bac 3 est dimensionné en fonction de la puissance de la chaudière de la distillerie.

L'invention n'est pas limitée à l'exemple représenté et notamment outre un circuit de chauffage, le ballon peut être raccordé à un circuit d'eau chaude sanitaire. De même les régulateurs de commande des circulateurs constituant toute ou partie de l'automate 18 peuvent être des modules regroupés ou séparés.

## Revendications

1. Dispositif de récupération de chaleur sur une cuve de refroidissement (1) telle qu'une cuve de refroidissement d'alcool dans un procédé de distillation **caractérisé en ce qu'**il comporte un bac (3), dont les parois sont recouvertes de matériau isolant thermique, alimenté à partir d'une arrivée d'eau chaude intermittente (2) en provenance de la cuve; ledit bac (3) logeant une pluralité de tubes échangeurs bobinés (4, 5, 6), en communication par des conduits (7, 8, 9, 10, 11, 12) en circuit fermé avec un ballon (17) de stockage d'eau chaude et d'alimentation d'un circuit extérieur (D, R) de chauffage et pour lequel les conduits sont pourvus de circulateurs (14, 15, 16) pilotés pour amener l'eau réchauffée dans le ballon (17).

2. Dispositif de récupération de chaleur selon la revendication 1 pour lequel les tubes échangeurs bobinés sont étagés en hauteur dans le bac pour récupérer la chaleur à divers niveaux dans le bac.

3. Dispositif de récupération de chaleur selon la revendication 2 pour lequel les tubes échangeurs sont reliés par groupes sur trois niveaux et disposés dans le bac de sorte qu'un premier groupe de tubes échangeurs (4) en haut du bac puisse récupérer la chaleur de l'eau en partie haute du bac, un deuxième groupe de tubes échangeurs (5) en partie intermédiaire du bac puisse récupérer la chaleur de l'eau en partie intermédiaire du bac et un troisième groupe de tubes échangeurs (6) en partie inférieure du bac puisse récupérer la chaleur de l'eau en partie inférieure du bac compte tenu de la stratification de la température de l'eau dans le bac.

4. Dispositif de récupération de chaleur selon l'une quelconque des revendications précédentes pour lequel un automate de contrôle (18) relié à des sondes de température (204a, 204b, 204c) sur les échangeurs et une sonde de température (205) en fond de ballon (17) est configuré pour piloter les circulateurs (14, 15, 16) des échangeurs en fonction de la température de l'eau dans les échangeurs reliés au ballon (17) par les conduits et en fonction de la température du ballon pour réguler la température dudit ballon (17).

5. Dispositif de récupération de chaleur selon l'une quelconque des revendications précédentes pour lequel le bac comporte une sortie (23) d'eau refroidie vers un réservoir (24) constituant une réserve de lavage de la distillerie.

6. Dispositif selon l'une quelconque des revendications précédentes pour lequel les tubes échangeurs organisées en groupes de tubes échangeurs comportent une pluralité de tubes circulaires ou en spirale bobinés et raccordés sur des tubes distributeurs (41, 42, 51, 52, 61, 62) eux-mêmes reliés aux conduits (7, 8, 9, 10, 11, 12) reliant les groupes de tubes échangeurs au ballon (17) de stockage d'eau chaude.

7. Dispositif de récupération de chaleur selon l'une quelconque des revendications précédentes pour lequel le ballon de stockage alimente le circuit de chauffage (302) au travers d'une bouteille de mélange (22).

8. Dispositif de récupération de chaleur selon l'une quelconque des revendications précédentes pour lequel le ballon (17) est pourvu d'un thermostat (30) pilotant un dispositif de commutation (32) adapté à commuter le chauffage soit sur le ballon (17) soit sur une chaudière (28) raccordée à la bouteille de mélange.

## Patentansprüche

1. Wärmerückgewinnungsvorrichtung auf einem Kühlbehälter (1), wie einem Kühlbehälter für Alkohol in einem Destillationsverfahren, **dadurch gekennzeichnet, dass** sie eine Wanne (3) beinhaltet, deren Wände mit einem Wärmedämmmaterial bedeckt sind, sie aus einem intermittierenden Warmwasserzufluss (2) aus der Wanne versorgt wird; wobei die Wanne (3) eine Vielzahl von gewickelten Tauscherrohren (4, 5, 6) beherbergt, durch Leitungen (7, 8, 9, 10, 11, 12) im geschlossenen Kreis in Austausch mit einem Speicher (17) zum Speichern von Warmwasser und zur Versorgung eines externen Heizungskreises (D, R), und wobei die Leitungen mit gesteuerten Umwälzpumpen (14, 15, 16) versehen sind, um das erwärmte Wasser in den Speicher (17) zu führen.

2. Wärmerückgewinnungsvorrichtung nach Anspruch 1, wobei die gewickelten Tauscherrohre in der Wanne in der Höhe gestuft sind, um die Wärme auf verschiedenen Ebenen in der Wanne zurückzugewinnen.

3. Wärmerückgewinnungsvorrichtung nach Anspruch 2, wobei die Tauscherrohre nach Gruppen auf drei Ebenen verbunden sind, und derart in der Wanne angeordnet sind, dass eine erste Gruppe von Tauscherrohren (4) oben in der Wanne die Wärme des Wassers im oberen Teil der Wanne rückgewinnen kann, eine zweite Gruppe von Tauscherrohren (5) im Zwischenteil der Wanne die Wärme des Wassers im Zwischenteil der Wanne rückgewinnen kann, und eine dritte Gruppe von Tauscherrohren (6) im unteren Teil der Wanne die Wärme des Wassers im unteren Teil der Wanne unter Berücksichtigung der Schichtung der Temperatur des Wassers in der Wanne rückgewinnen kann.

4. Wärmerückgewinnungsvorrichtung nach einem der vorstehenden Ansprüche, wobei der Steuerungsautomat (18), der mit Temperatursonden (204a, 204b, 204c) an den Tauschern, und einer Temperatursonde (205) am Boden des Speichers (17) verbunden ist, konfiguriert ist, um die Umwälzpumpen (14, 15, 16) der Tauscher in Abhängigkeit von der Temperatur des Wassers in den Tauschern, die durch die Leitungen mit dem Speicher (17) verbunden sind, und in Abhängigkeit von der Temperatur des Speichers zu steuern, um die Temperatur des Speichers (17) zu regeln.

5. Wärmerückgewinnungsvorrichtung nach einem der vorstehenden Ansprüche, wobei die Wanne einen Ausgang (23) für abgekühltes Wasser zu einem Reservoir (24) beinhaltet, das eine Waschreserve der Destille bildet.

6. Vorrichtung nach einem der vorstehenden Ansprüche, wobei die in Gruppen von Tauscherrohren organisierten Tauscherrohre eine Vielzahl von kreisförmigen oder Spiralrohren beinhalten, die gewickelt, und an Verteilerrohre (41, 42, 51, 52, 61, 62) angeschlossen sind, die selbst mit den Leitungen (7, 8, 9, 10, 11, 12) verbunden sind, die die Gruppen von Tauscherrohren mit dem Speicher (17) zum Speichern von Warmwasser verbinden.

7. Wärmerückgewinnungsvorrichtung nach einem der vorstehenden Ansprüche, wobei der Speicher zum Speichern den Heizkreislauf (302) durch eine Mischflasche (22) hindurch versorgt.

8. Wärmerückgewinnungsvorrichtung nach einem der vorstehenden Ansprüche, wobei der Speicher (17) mit einem Thermostat (30) versehen ist, der eine Umschaltvorrichtung (32) ansteuert, die angepasst ist, um die Heizung entweder auf den Speicher (17) oder auf einen Heizkessel (28) umzuschalten, der an die Mischflasche angeschlossen ist.

## Claims

1. Heat recovery device on a cooling tank (1) such as an alcohol cooling tank in a method for distillation **characterised in that** it includes a container (3), the walls of which are covered with thermally insulating material, supplied from an intermittent hot water inlet (2) coming from the tank; said container (3) housing a plurality of coiled exchanger tubes (4, 5, 6), in communication by conduits (7, 8, 9, 10, 11, 12) in a closed circuit with a tank (17) for the storage of hot water and supplying an external heating circuit (D, R) and for which the conduits are provided with circulators (14, 15, 16) controlled to convey the water heated in the tank (17).

2. Heat recovery device according to claim 1 for which the coiled exchanger tubes are tiered in height in the container to recover the heat at various levels in the container.

3. Heat recovery device according to claim 2 for which the exchanger tubes are connected by groups on three levels and disposed in the container in such a way that a first group of exchanger tubes (4) at the top of the container can recover the heat from the water in the top portion of the container, a second group of exchanger tubes (5) in the intermediate portion of the container can recover the heat from the water in the intermediate portion of the container and a third group of exchanger tubes (6) in the lower portion of the container can recover the heat from the water in the lower portion of the container in light of the stratification of the temperature of the water in the container.

4. Heat recovery device according to any preceding claim for which a control unit (18) connected to temperature probes (204a, 204b, 204c) on the exchangers and a temperature probe (205) at the bottom of the tank (17) is configured to control the circulators (14, 15, 16) of the exchangers according to the temperature of the water in the exchangers connected to the tank (17) by the conduits and according to the temperature of the tank to regulate the temperature of said tank (17).

5. Heat recovery device according to any preceding claim for which the container includes a cold water outlet (23) to a reservoir (24) constituting a washing reserve for the distillery.

6. Device according to any preceding claim for which the exchanger tubes organised into groups of exchanger tubes include a plurality of circular or spiral tubes coiled and connected on distributor tubes (41, 42, 51, 52, 61, 62) themselves connected to the conduits (7, 8, 9, 10, 11, 12) connecting the groups of exchanger tubes to the hot water storage tank (17).

7. Heat recovery device according to any preceding claim for which the storage tank supplies the heating circuit (302) through a mixing tank (22).

8. Heat recovery device according to any preceding claim for which the tank (17) is provided with a thermostat (30) controlling a switching device (32) adapted to switch the heating either on the tank (17) or on a boiler (28) connected to the mixing tank.
